# EUROPEAN PATENT APPLICATION

(11) **EP 4 635 930 A1**
(43) Date of publication of application: **22.10.2025**
(21) Application number: 24315175.0
(22) Date of filing: 15.04.2024
(51) Int. Cl.: C04B 28/04, C04B 28/08, C04B 28/10, C04B 28/16, C04B 111/00, C04B 40/06, C04B 7/02, C04B 22/14, C04B 22/06

(54) **LOW CARBON SOLIDIFYING COMPOSITION WITH ENHANCED MECHANICAL PROPERTIES**

(71) Applicant: Holcim Technology Ltd, 6300 Zug (CH)
(72) Inventor: Richard, Nicolas, 38070 SAINT QUENTIN FALLAVIER (FR); Giacometti, Tifenn, 38070 SAINT QUENTIN FALLAVIER (FR); Tapsoba, Nouffou, 38070 SAINT QUENTIN FALLAVIER (FR)
(74) Representative: Regimbeau

(57) **Abstract**

The invention relates to a binder comprising, with respect to the total weight of the binder:
• 4-20 wt.-% Portland clinker
• 65 - 95 wt.-% blast furnace slag,
• 1 -10 wt.-% of a mixture of calcium sulfate and sodium sulfate, and
• 6-15 wt.-% lime.

The invention further relates to a slurry comprising the binder of the invention and water, as well as the use of the binder or slurry of the invention for stabilizing a soil and/or a ground.

## Description

### FIELD OF THE INVENTION

The invention relates to low-carbon solidifying compositions for soil and ground stabilization, specifically for soil reinforcement and improvement, with improved mechanical properties.

### BACKGROUND OF THE INVENTION

Conventional solidifying agents for soil and ground stabilization comprising low-carbon binder compositions are known to generally have low efficacy, especially when used to stabilize challenging soils such as soil containing high organic content and/or high clayey content. They indeed require to be used in high amounts to provide satisfactory results in terms of mechanical strength, which renders them cost-inefficient.

At the same time, the equipment used for mixing the solidifying agent to the soil in deep, particularly in dry mixing condition (DSM), has limited capacity for the quantity of the solidifying agent that can be added to the soil. There is therefore a need for solidifying agents that provide improved mechanical strengths with reduced quantity of solidifying agent added to the soil. Preferably, solidifying compositions should be required in amounts of less than 200-250 kg/m³ to provide the required mechanical strength. High-strength low-carbon binder compositions have been described for instance JP2000160159A, JPH2010245555 or KR20170142581A.

Mention may also be made for instance of CN101684038, which specifically relates to a high-strength soil solidification materials, in particular for reinforcing ground prior to installing buildings, bridges or other ground structures. CN101684038 thus aims at providing a solidifying composition giving good performances (high bearing capacity) when used in low amounts. The compositions provided by CN101684038 comprise a powdery material and an optional liquid material including pulp waste liquid.

However, there is still a need for low-carbon solidifying compositions with high mechanical performance improvement capacities, advantageously both in the short- and long-term (i.e. improving the compressive strength at 7 days and at 28 days), thus drastically reducing the amount of solidifying composition to be used. Preferably, the content of binder required per cubic meter of soil to be stabilized should be 200 kg/m³ or less.

### SUMMARY OF THE INVENTION

Surprisingly, the inventors discovered that the use of a mixture of lime, calcium sulfate and sodium sulfate greatly improve the performance of low-carbon solidifying compositions used for soil and ground stabilization.

Without wishing to be bound by theory, it is thought that the sulfate source as well as the lime play the role of slag activator. In addition to its binder activation role, the lime flocculates the clay or organic matter present in the soil (or ground) to be stabilized and helps regulating the pH of the mixture comprising soil (or ground) and binder.

The inventors have demonstrated that the lime content is critical to obtain a satisfying activating effect, and advantageously with high mechanical performances at 7 and 28 days, in particular for challenging soils.

In a first aspect, the invention thus concerns a binder comprising, with respect to the total weight of the binder:
- 4 - 20 wt.-% Portland clinker
- 65 - 95 wt.-% blast furnace slag,
- 1 -10 wt.-% of a mixture of calcium sulfate and sodium sulfate, and
- 6-15 wt.-% lime.

In advantageous embodiments, the binder is characterized in that:
- It comprises at least 7 wt.-% lime, advantageously at least 10 wt.-% lime.
- It comprises at least 90 wt.-%, with respect to the total weight of the binder, of Portland clinker, blast furnace slag, sulfate source and lime.
- the calcium sulfate/sodium sulfate weight ratio ranges from 2:1 to 1:2, preferably 1.5:1 to 1:1.5, even more preferably from 1:1.
- the Portland Clinker to blast furnace slag weight ratio ranges from 0.04 to 0.25.
- the calcium sulfate is gypsum or anhydrite.

In another aspect, the invention concerns a slurry comprising:
- the binder of the invention, and
- water,
with a water/binder mass ratio ranging from 0.5 to 6, preferably from 1 to 4.

The advantages of the invention are as follows:
- high mechanical performances at 7 and 28 days for both conventional soils and challenging soils (such as clayey or organic soils),
- lower contents of solidifying composition are needed per cubic meter of soil or ground to be stabilized, thus allowing a satisfying use of the mixing equipments which in some instances allow only 230 kg of binder /m³ of soil to be stabilized in dry mixing applications.
- low carbon footprint, due to the use of high contents of blast furnace slags, but also thanks to the lowering of the dosing of solidifying composition to obtain the same mechanical performances.

### DEFINITIONS

**Essentially free of:** As used herein, a material is "essentially free of" a particular component when the component is present in a very low content, usually 1% by weight or less, compared to the total weight of the material, more especially below 0.5% by weight. For instance, a composition is essentially free of sodium silicate when sodium silicate or fluorosilicate is present in the composition in an amount of less than 1 wt.-% or preferably 0.5 wt.-%, even more preferably 0.1 wt.-% of the total weight of composition.

**Soil or ground:** the term "soil" or "ground" means a more or less friable material predominantly made up of earth and/or sand and/or clay in all possible proportions. The soil may be dry or wet. A wet soil contains water.

**MBVs:** Methylene Blue Value of Soil, gives indications regarding soil clay content. It is measured according to standard NF P 94-068 of October 1998.

**PI:** Plasticity index is a characteristic property of very fine or clayey soil elements. The plasticity index PI measures the extent of the water content range within which the soil is in a plastic state. It is obtained by subtracting the plastic limit (PL) from the liquid limit (LL). The LL characterizes the transition between a plastic state and a liquid state. The PL characterizes the transition between a solid state and a plastic state. These indices are determined according to standard NF EN ISO 17892-12 of July 2018.

**Passing at 80µm:** fines content of the soil, by dry sieving according to standard NF EN 933-1 of May 2012. The fines content is expressed as a weight ratio relative to the total dry mass of the soil.

**Challenging soil:** soil containing a certain amount of clayey, making it difficult to treat. As used herein, a soil is considered as challenging if passing at 80µm >35 % and the Ip > 12 (A2 soil according to guide GTR (Guide de terrassement routier of June 2023). A challenging soil can contain organic carbon.

**GTR:** The GTR analysis consists of a set of laboratory tests carried out using samples from a soil study. The purpose of these tests is to determine the classification of a soil and other characteristics, according to the standard NF P11-300 of September 1992.

### DETAILED DESCRIPTION OF EMBODIMENTS OF THE INVENTION

### 1. Solidifying premixed binder

The invention concerns a binder comprising, with respect to the total weight of the binder:
- 4 - 20 wt% Portland clinker
- 65 - 95 wt% blast furnace slag,
- 1 - 10 wt% of a mixture of calcium sulfate and sodium sulfate, and
- 6 -15 wt% lime.

Advantageously, the binder comprises at least 85 wt.-%, preferably 90 wt.-%, even more preferably 95 wt.-%, with respect to the total weight of the binder, of the above mixture of Portland cement, blast furnace slag, sulfate source and lime.

### Portland clinker and slag

Portland clinker is as defined in Cement Standard NF EN 197-1 of April 2012.

Blast furnace slag is as defined in Cement Standard NF EN 197-1 of April 2012. Preferably, the blast-furnace slag is a ground granulated blast furnace slag (also noted GGBS or GGBFS). It is a component of metallurgic cement and is typically as defined in the European NF EN 197-1 Standard of April 2012, paragraph 5.2.2.

Portland clinker and blast furnace slag can be pre-mixed. Accordingly, the source of Portland clinker can be cement selected from CEM I or CEM III Portland cement as defined in Cement Standard NF EN 197-1 of April 2012. CEM III Portland cement can be a Type A or B or C cement, preferably Type C.

Advantageously, the binder comprises, with respect to the total weight of the binder, from 70 wt% to 90 wt% of slag.

Advantageously, the binder comprises, with respect to the total weight of the binder, from 4 wt% to 19 wt% of Portland clinker, preferably from 8 wt% to 16 wt% of Portland clinker.

Advantageously, the binder comprises, with respect to the total weight of the binder, from 70 wt% to 91 wt% of blast furnace slag, preferably from 75 wt% to 85 wt% of blast furnace slag.

Advantageously, the Portland clinker to blast furnace slag weight ratio ranges from 0.01 to 0.4, preferably from 0.0.4 to 0.25.

### mixture of calcium sulfate and sodium sulfate

Calcium sulfate may be provided from various sources, such as gypsum, anhydrite or hemihydrate. Preferably, the calcium sulfate is provided by gypsum or anhydrite.

Gypsum is calcium sulfate dihydrate, with the chemical formula CaSO₄.2H₂O. Gypsum exists in the natural state and includes phosphogypsum and sulfogypsum. Sulfogypsum is a byproduct formed during the production of phosphoric acid or from the treatment of sulfur dioxide emissions from power plants. It is a calcium sulfate material similar to gypsum but with additional sulfates. Phosphogypsum is a byproduct of the production of phosphoric acid, which is used in the manufacture of fertilizers and other products. It is formed when phosphate rock is treated with sulfuric acid to produce phosphoric acid. Anhydrite is a mineral composed of calcium sulfate (CaSO4) without any water molecules bound within its crystal structure. It occurs in sedimentary deposits and is often associated with evaporite deposits. Hemihydrate (CaSO4. 0.5H2O) is a compound formed when one water molecule is combined with each calcium sulfate molecule. Calcium sulfate produced as a by-product of certain industrial processes may also be used.

Sodium sulfate acts as slag activator.

Sodium sulfate is preferably anhydrous.

Depending on the manufacturing method; sodium sulfate may comprise acidic impurities or basic impurities. The sodium sulfate used in the invention may be acidic (presence of acidic impurities), neutral (pure) or basic (presence of basic impurities). Preferably, it is not acidic, *i.e.* typically, the pH of an aqueous solution saturated with the sodium sulfate used in the composition is greater than 6.5.

The content in wt.-% of the mixture of calcium sulfate and sodium sulfate is calculated the ratio of the weight of calcium sulfate + the weight of sodium sulfate to the total weight of the binder, expressed as %.

The content of the mixture of calcium sulfate and sodium sulfate in the binder ranges from 1 to 10 wt.-% (compared to the total weight of the binder), preferably from 2 to 8 wt.-%, even more preferably from 3 to 7 wt.-%.

Advantageously, the calcium sulfate / sodium sulfate weight ratio of the binder composition ranges from 2:1 to 1:2, preferably 1.5:1 to 1:1.5, even more preferably from 1:1.

### Lime

Lime can be calcium oxide, calcium hydroxide, magnesium oxide, magnesium hydroxide or mixtures thereof. Usually, it consists essentially of calcium oxide. The lime may be slaked lime or quicklime.

Preferably, the binder comprises at least 7 wt.-%, preferably at least 10 wt.-% of lime.

The lime content is overdosed compared to the purpose of slag activation. It has been surprisingly found that such a high lime content may not only activate slag but also flocculate the clays present in the soil and stabilize it. It may also regulate the pH to create a better environment for the binder.

### Others

Optional component, if any, preferably satisfies the requirements of the Cement Standard NF EN 197-1 of April 2012.

### Particular embodiments

Advantageously, the composition is essentially free of sodium silicate, and/or essentially free of sodium fluorosilicate.

### 2. Solidifying slurry or paste

The invention further concerns a solidifying slurry comprising:
- the binder of the invention, and
- water,
with a water/ binder (in the dry state) mass ratio ranging from 0.5 to 6, preferably from 1 to 4.

More specifically, the water/ binder mass ratio of the slurry ranges from 1 to 4.5, preferably 1.5 to 2.5, and is typically of 2. The person of skill in the art will adapt the W/C ratio depending on the soil moisture content, and the mixing technique, the targeted consistency.

Any conventional process for preparing a cement slurry is suitable to prepare the slurry of the invention.

The slurry may be blended and/or homogenized with water by any means to obtain a cement slurry.

Preferably, the slurry is a ready-mix solidifying slurry.

The invention also relates to a slurry obtainable and/or obtained according to the process of the invention.

### 3. Uses

The invention further concerns the use of the binder or of the slurry of the invention for stabilizing a soil and/or a ground. The binder can then also be called a solidifying binder and the slurry a solidifying slurry.

Alternatively, the invention concerns the use of the binder or of the slurry of the invention for soil reinforcement and improvement.

The invention further concerns a method for stabilizing a soil and/or a ground (or for reinforcing or improving soil), comprising:
mixing a soil or ground to be stabilized and the binder or of the invention.

In some embodiments, the ground or soil to be stabilized is wet, and has a water content such that addition of water is not necessary for the binder to be hydrated and harden. In these embodiments, the mixing is performed with the binder.

In some embodiments, the ground or soil to be stabilized is dry or has a low water content, and when the mixing is performed with the binder, it is necessary to add water to get a satisfactory hydration reaction and hardening. Alternatively, the slurry is used in the mixing.

The soil to be stabilized may be in particular a challenging soil, such as a soil with a particle passing at 80µm greater than 35% and a plasticity index (PI) exceeding 12 based on the Atterberg limit, optionally containing organic carbon.

The soil to be stabilized may also be a challenging clayey soil, in particular classified under category A2, A3 or A4 as per the GTR classification.

Preferably, the mass/volume ratio between the dry binder to the dry soil or ground to be stabilized ranges from 120 to 200 kg/m³, preferably from 130 to 190 kg/m³, even more preferably from 140 to 180 kg/m³.

Advantageously, the method may further comprise, prior to the mixing:
a) Excavating a soil or ground to be stabilized,
b) Placing the excavated soil or ground to be stabilized in a mixer.

The mixing with the binder or the slurry is then performed in the mixer.

In some embodiments, the binder or slurry is added in the mixer containing the soil or ground to be stabilized.

In some embodiments, the binder or slurry is placed in the mixer prior to step b).

In some embodiment, the mixing is performed directly into the soil. In such embodiments, the method further comprises, prior to the mixing:
Injecting the binder or the slurry into the soil or ground to be stabilized, the mixing being performed with an open mobile mixing device such as a rotary tool with single or multiple vertical axes, using for instance a pile type machine.

According to another aspect, the invention concerns a product that may be obtained by the method of the invention, characterized in that it comprises a soil or ground, and a hardened binder as defined herein.

Advantageously, the unconfined compressive strength at 7 days of the product obtained by the method of the invention is of 0.4 MPa or more. Preferably, the unconfined compressive strength at 7 days of the product obtained by the method of the invention ranges from 0.4 to 3 Mpa, such as between 0.4 and 1.5 MPa.

Typically, the unconfined compressive strength at 28 days of the product obtained by the method of the invention is of 1.8 MPa or more. Preferably, the unconfined compressive strength at 28 days of the product obtained by the method of the invention ranges from 1.9 to 4 Mpa, such as between 2 and 3.5 MPa.

### METHODS

### Method for measuring the unconfined compressive strength (UCS):

The test consists, in the laboratory, of preparing cylindrical soils samples, treated with the innovative solution according to a preparation method defined for the application of soil mixing, and of determining the compressive strength according to the EN 13 286-41 standard of July 2003.

### DRAWINGS

Figure 1 shows the results of the unconfined compressive strength at 7 days for the soils stabilized with the binders of example 2.
Figure 2 shows the results of the unconfined compressive strength at 28 days for the soils stabilized with the binders of example 2.

### EXAMPLES

The following non-restrictive example illustrate embodiments of the invention.

### Example 1:

### 1.1. Soil to be stabilized

The soil used in example 1 is described just below:
- The soil moisture content measured, according to the standard NF EN 1097-5 of October 2008, is 17.6wt.-%.
- The dry density in place, used for dosing calculation, is 1.650 t/m3
- The passing element at 80µm is 90.2%.
- A chemical analysis showed that the main components of the soil are: Quartz, Muscovite, Calcite, Microcline, Anorthite, Kaolinite, Clinochlore, Dolomite.
- The plasticity index (PI) of the soil was measured to be 15.5.
- The MBVs (methylene blue value of soil) of the soil is 1.5.

According to GTR, the soil used is classified as A2.

### 1.2. Tested compositions

### Materials

The reference cement used is a commercial CEM III/C with a Cement/slag ratio of 0.18. The slag content specified in the examples is actually the slag contained in the CEM III/C.

The Calcium Sulfate content specified in the examples is actually the gypsum contained in the CEM III/C.

The sodium sulfate used is an anhydrous Na2SO4 supplied by VWR.

The lime used is a quick lime supplied by HOLCIM Belgium.

Water: tap water.

### Preparation of the compositions

The composition of the reference mix is summarized in Table 1 below. Reference binder is a commercial cement CEM III/C. Comparative binder is a mix of cement CEM III/C + Na2SO4 (X% by weight of Na2SO4 compared to the weight of CEM III/C). Binder 1.3 is a binder according to the invention. Binder 1.3 is a mix of CEM III/C + Na2SO4 (X% by weight of Na2SO4 compared to the weight of CEM III/C) + lime (X% by weight of lime compared to the weight of CEM III/C).

**Table 1: compositions tested in example 1 (expressed in wt.-% relative to the total weight of the binder)**

| **Binder** | **Clinker** | **GGBFS** | **Calcium Sulfate (gypsum)** | **Sodium Sulfate** | **Lime** |
|---|---|---|---|---|---|
| **Binder 1.1 (reference example: CEM III/C)** | 14.5 | 82.1 | 3.4 | 0 | 0 |
| **Binder 1.2 (comparative example: CEM III/C+)** | 14.1 | 79.7 | 3.3 | 3 | 0 |
| **Binder 1.3** | 13 | 73.9 | 3 | 3 | 7 |

As slurry was prepared using a mixer Turbotest Rayneri equipped with a deflocculating blade, into which tap water was first introduced.

Then, while mixing at 1500 rpm, the different components of the binder were added. Mixing at 1500 rpm was continued for 10 minutes. According to this soil, the W/C ratio was fixed at 2. between 0.6 and 3, preferably from 2.0-3.0. The total water/(binder+dry soil) mass ratio is of 36.8%

The slurry was then added into a mixer containing the soil to be stabilized. The soil and slurry were then mixed until the mixture is homogeneous in a PERRIER mixer. Different dosages of dry binder composition/dry soil were used: 140 kg/m³, 160 kg/m³ and 180 kg/m³.

The stabilized soils were then tested for unconfined compressive strength at 7 days and 28 days.

### 1.3. Results

The results are summarized in the table below.

**Table 2: Strength results (UCS = unconfined compressive strength; SD = standard deviation)**

| **Binder composition** | **Binder dosage kg/m³ of dry soil** | **UCS 7d in MPa** | **SD** | **UCS 28d in MPa** | **SD** |
|---|---|---|---|---|---|
| **Binder 1.1 (reference)** | 140 | 0,13 | 0,01 | 0,72 | 0,04 |
| | 160 | 0,24 | 0,01 | 1,21 | 0,09 |
| | 180 | 0,37 | 0,02 | 1,70 | 0,12 |
| **Binder 1.2 (comparative example)** | 140 | 0,32 | 0,01 | 1,33 | 0,07 |
| | 160 | 0,38 | 0,00 | 1,39 | 0,15 |
| | 180 | 0,60 | 0,03 | 2,17 | 0,06 |
| **Binder 1.3 (invention)** | 140 | 0,68 | 0,01 | 1,89 | 0,03 |
| | 160 | 0,77 | 0,02 | 1,96 | 0,01 |
| | 180 | 1,08 | 0,03 | 2,84 | 0,10 |

The composition according to the invention (binder 1.3) gives high performance even using the lowest concentration of binder of 140kg/m³.

### Example 2:

### 2.1. Soil to be stabilized

The soil used in example 2 is described just below.
- The soil moisture content measured, according to the standard NF EN 1097-5 of October 2008, is 12.2wt.-%.
- The dry density in place, used for dosing calculation, is 1.650 t/m3
- The passing element at 80 µm is 89.9%.
- A chemical analysis showed that the main components of the soil are: Quartz, Microcline, Albite, Muscovite.
- The plasticity index (PI) of the soil was measured to be 14.
- The MBVs (methylene blue value of soil) of the soil was measured to be 2.14.

According to GTR, the soil used is classified as A2.

### 2.2. Tested compositions

### Materials

The reference cement used is a laboratory blended CEM III/C using raw material from Holcim Plant in Belgium with a Cement/slag ratio of 0.18.

The slag content specified in the examples is actually the slag contained in the laboratory blended CEM III/C.

The calcium sulfate content specified in the examples is actually the anhydrite contained in the CEM III/C.

The sodium sulfate used is an anhydrous Na2SO4 supplied by VWR.

The lime used is a quick lime supplied by HOLCIM Belgium.

Water: tap water.

### Preparation of the compositions

The composition of the reference mix is summarized in Table 3 below.

**Table 3: compositions tested in example 2 (expressed in wt.-% relative to the total weight of the binder)**

| **Binder** | **Clinker** | **GGBFS** | **Calcium sulfate (Anhydrite)** | **Sodium Sulfate** | **Lime** | **R1** | **R2** |
|---|---|---|---|---|---|---|---|
| **Binder 1** | 14.3 | 80.8 | 4.9 | 0 | 0 | 0.18 | 0.35 |
| **Binder 2** | 13.8 | 78.4 | 4.8 | 0 | 3 | 0.18 | 0.35 |
| **Binder 3** | 13.3 | 75.1 | 4.6 | 0 | 7 | 0.18 | 0.35 |
| **Binder 4** | 12.8 | 72.7 | 4.4 | 0 | 10.0 | 0.18 | 0.35 |
| **Binder 5** | 12.1 | 68.7 | 4.2 | 0 | 15 | 0.18 | 0.35 |
| **Binder 6** | 13.8 | 78.4 | 4.8 | 3 | 0 | 0.18 | 0.35 |
| **Binder 7** | 13.4 | 76 | 4.6 | 3 | 3 | 0.18 | 0.35 |
| **Binder 8** | 12.8 | 72.7 | 4.4 | 3.0 | 7.0 | 0.18 | 0.35 |
| **Binder 9** | 12.4 | 70.3 | 4.3 | 3 | 10 | 0.18 | 0.35 |
| **Binder 10** | 11.7 | 66.3 | 4 | 3 | 15 | 0.18 | 0.35 |
| **Binder 11** | 14.6 | 82.4 | 0 | 3 | 0 | 0.18 | 0.35 |

| | | | | | | | |
|---|---|---|---|---|---|---|---|
| R1= Clinker/GGBFS mass ratio R2 = Anhydrite/clinker mass ratio | | | | | | | |

The soil described at 2.1 was then stabilized using the protocol of section 1.2.

### Results

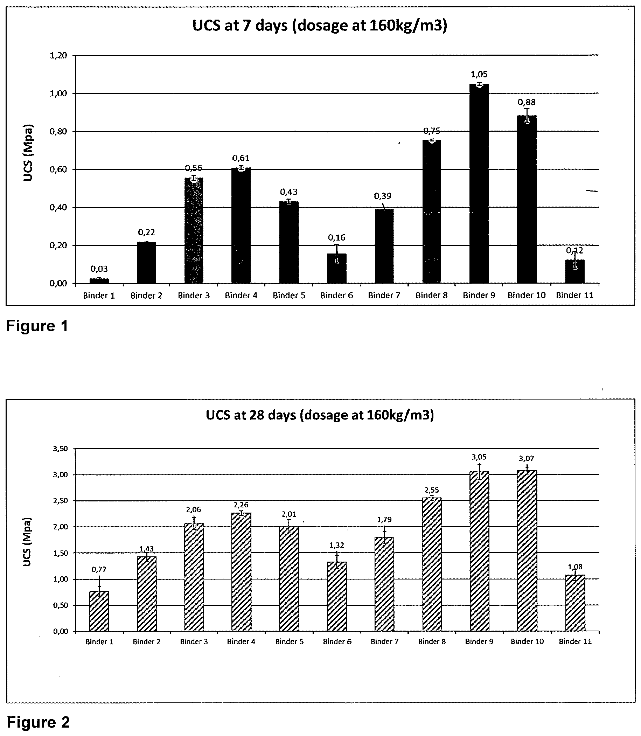

The results are presented in table 4 below, and in figure 1 (UCS at 7 days) and figure 2 (UCS at 28 days). SD stands for Standard deviation. Table 4 also displays pH measurement after 1 hour soaking on 28 days samples after UCS test.

pH measurements are performed on the samples tested for the UCS at 28 days. Samples are crushed at passing 4 mm and then tested. 20g of each samples are put in 100gr of demineralized water. The pH is measured after soaking in demineralized water for one hour.

**Table 4**

| **Binder** | **Dosage kg/m3** | **UCS 7days in MPa** | **SD** | **UCS 28days in MPa** | **SD** | **pH at 1 hour soaking** |
|---|---|---|---|---|---|---|
| **Binder 1** | 160 | 0.03 | 0.00 | 0.77 | 0.09 | 11.92 |
| **Binder 2** | 160 | 0.22 | 0.01 | 1.43 | 0.08 | 11.92 |
| **Binder 3** | 160 | 0.56 | 0.01 | 2.06 | 0.12 | 12.05 |
| **Binder 4** | 160 | 0.61 | 0.01 | 2.26 | 0.04 | 12.12 |
| **Binder 5** | 160 | 0.43 | 0.05 | 2.01 | 0.13 | 12.10 |
| **Binder 6** | 160 | 0.16 | 0.00 | 1.32 | 0.13 | 12.11 |
| **Binder 7** | 160 | 0.39 | 0.01 | 1.79 | 0.12 | 12.15 |
| **Binder 8** | 160 | 0.75 | 0.01 | 2.55 | 0.05 | 12.17 |
| **Binder 9** | 160 | 1.05 | 0.04 | 3.05 | 0.15 | 12.25 |
| **Binder 10** | 160 | 0.88 | 0.04 | 3.07 | 0.07 | 12.08 |
| **Binder 11** | 160 | 0.12 | 0.01 | 1.08 | 0.11 | 12.07 |

A lime content of 6 wt.-% or more translates into an increase in unconfined compressive strength at 7 days, even when no sodium sulfate is used, as can be seen from examples 2.2 and 2.3 (binders 2 and 3, using respectively 3 and 7% lime addition). In the absence of sodium sulfate, increasing the lime content to 10.0 wt.-% does not affect significantly the UCS results of the stabilized soil, while an increase up to 15 wt.-% results in a decrease in strength.

Binder 6 demonstrates that using sodium sulfate alone (*i*.*e*. without lime) is less effective than the combination with lime.

The results obtained with binders 7-10 demonstrate the synergy of the lime + sodium sulfate combination. As shown in figure 1, there is a linear effect of the lime content from 3-10 wt.-%, with a significant increase observed between binders 3-7 (almost doubling the strength from 3 to 10 wt.-%). More surprisingly, the combined effect from lime and sodium sulfate is demonstrated by further increasing the lime content to 7 wt.-% or more (binder 8 and binder 9). Increasing the lime concentration from 7 to 10 wt.-% while keeping the sodium sulfate content constant results in a significant increase in strength. No such effect is observed for binders 3 and 4 (binders without sodium sulfate).

Finally, the pH measurements underline the fact that the additional lime added has a technical effect irrespective of the pH.

## Claims

1. A binder comprising, with respect to the total weight of the binder:
• 4-20 wt.-% Portland clinker
• 65 - 95 wt.-% blast furnace slag,
• 1-10 wt.-% of a mixture of a calcium sulfate and sodium sulfate, and
• 6-15 wt.-% lime.

2. The binder of claim 1, comprising at least 7 wt.-% lime, advantageously at least 10 wt,-% lime.

3. The binder of claim 1 or 2, comprising at least 90 wt.-%, with respect to the total weight of the binder, of Portland clinker, blast furnace slag, sulfate source and lime.

4. The binder of any of claims 1 to 3, wherein the calcium sulfate /sodium sulfate weight ratio ranges from 2:1 to 1:2, preferably 1.5:1 to 1:1.5, even more preferably from 1:1.

5. The binder of any of claims 1 to 4, wherein the Portland Clinker to blast furnace slag weight ratio ranges from 0.04 to 0.25.

6. The binder of any of claims 1 to 5, wherein the calcium sulfate is provided in the form of gypsum or anhydrite.

7. A slurry comprising:
• the binder of any of claims 1 to 6, and
• water,
with a water/binder mass ratio ranging from 0.5 to 6, preferably from 1 to 4.

8. Use of the binder of any of claims 1 to 6 or of the slurry of claim 7 for stabilizing a soil and/or a ground.

9. Method for stabilizing a soil and/or a ground, comprising:
mixing a soil or ground to be stabilized and the binder of any of claims 1 to 6 or of the slurry of claim 7.

10. The method of claim 9, further comprising, prior to the mixing:
Excavating a soil or ground to be stabilized,
Placing the excavated soil or ground to be stabilized in a mixer,
the mixing with the binder of any of claims 1 to 6 or the slurry of claim 7 being performed in the mixer.

11. The method of claim 9, further comprising, prior to the mixing:
Injecting the binder of any of claims 1 to 6 or of the slurry of claim 7 into the soil or ground to be stabilized,
the mixing being performed with an open mobile mixing device.

12. The method of any of claims 9 to 11, wherein the mass/volume ratio between the dry solidifying composition or slurry to the dry soil or ground to be stabilized ranges from 120 to 200 kg/m³, preferably from 130 to 190 kg/m³, even more preferably from 140 to 180 kg/m³.
